# EUROPÄISCHE PATENTSCHRIFT

(11) **EP 0 822 141 B1**
(45) Veröffentlichungstag und Bekanntmachung des Hinweises auf die Patenterteilung: **24.11.1999**
(21) Anmeldenummer: 97111107.5
(22) Anmeldetag: 03.07.1997
(51) Int. Cl.: B65B 9/20, B65B 1/16

(54) **Vertikale Schlauchbeutelmaschine und Verfahren zur Beschleunigung einer Produktportion in einer vertikalen Schlauchbeutelmaschine**
Vertical form-fill-seal machine and method of accelerating a product charge in a vertical form-fill-seal machine
Machine verticale de formage, remplissage et scellage et procédé pour accélérer une charge de produit dans une machine verticale de formage, remplissage et scellage

(30) Priorität: 02.08.1996 DE 19631258
(43) Veröffentlichungstag der Anmeldung: 04.02.1998
(73) Patentinhaber: Rovema Verpackungsmaschinen GmbH, 35463 Fernwald (DE)
(72) Erfinder: Kammler, Roman, Dr., 67547 Worms (DE); Baur, Walter, Dr., 63584 Gründau (DE)

(56) Entgegenhaltungen:
- EP-A- 0 192 604
- GB-A- 1 091 006

## Beschreibung

Die Erfindung betrifft einerseits eine vertikale Schlauchbeutelmaschine mit einer Formschulter zum Formen eines Folienschlauches aus einer ebenen Folienbahn, einem Füllrohr zur äußeren Aufnahme des Folienschlauches, einem Folienabzug, einer Längsschweißeinrichtung, gegeneinander beweglichen Quersiegelbacken, einem Zuführrohr zum Zuführen einer zu verpackenden Produktportion in das Füllrohr, wobei das Füllrohr unter Bildung eines Schachtes mit ringförmigem Querschnitt doppelwandig ausgebildet ist, sowie mit einem Drucklufteinlaß und einem mit dem Schacht verbundenen Druckluftauslaß zur Beschleunigung einer Produktportion im Innern des Füllrohres mittels Druckluft.

Zum anderen betrifft die Erfindung ein Verfahren zur Beschleunigung einer Produktportion in einer derartigen vertikalen Schlauchbeutelmaschine.

Eine vertikale Schlauchbeutelmaschine der eingangs beschriebenen Art ist aus der EP-OS 0 192 604 bekannt. Bei der bekannten Schlauchbeutelmaschine wird eine nach unten gerichtete Luftströmung dazu genutzt, die Fallbeschleunigung einer zu verpackenden Produktportion zu erhöhen. Die Luftströmung wird mittels eines Drucklufteinlasses an der Wand eines Fülltrichters und mittels eines Druckluftauslasses am Füllrohr realisiert. Das Füllrohr ist doppelwandig ausgestaltet. Eine aus dem Fülltrichter in das Füllrohr fallende Produktportion wird durch den abwärts gerichteten Luftstrom zusätzlich beschleunigt. Dadurch wird die Fallzeit reduziert und die Verpackungsgeschwindigkeit erhöht.

Die bekannte Schlauchbeutelmaschine hat den Nachteil, daß der Luftstrom eine rieselfähige oder mehrstückige Produktportion während des freien Falls auseinanderzieht, da wandnahe Produktpartikel im Fülltrichter wegen der dort herrschenden höheren Geschwindigkeit der Luftströmung eine größere Genauigkeit erfahren als mitten in der Produktportion befindliche Produktpartikel. Eine auseinandergezogene Produktportion fällt nicht so schnell in einen Schlauchbeutel wie eine kompakte Produktportion. Der Vorteil der fallunterstützenden, die Verpackungsgeschwindigkeit erhöhenden Luftströmung wird durch das Auseinanderziehen der Produktportion wieder verringert.

Der Erfindung liegt die Aufgabe zu Grunde, auch rieselfähige oder mehrstückige Produktportionen mit erhöhter Fallbeschleunigung in Schlauchbeutel einzufüllen, ohne daß dabei ein luftströmungsbedingtes Auseinanderziehen der Produktportionen vorkommt.

Gelöst ist die Aufgabe gemäß den Ansprüchen 1 und 6. Im Zuführrohr der erfindungsgemäßen Schlauchbeutelmaschine sind zwei in Produktzuführrich tung hintereinander angeordnete, das Zuführrohr jeweils dicht verschließende, rückstellbare Klappen vorgesehen, und der Drucklufteinlaß mündet in den zwischen den Klappen im Zuführrohr befindlichen Raum.

Beim erfindungsgemäßen Verfahren wird die Produktportion aus einem unter Druck befindlichen, oben und unten mittels jeweils einer Klappe verschlossenen Raum durch Öffnen der unteren, unter der Produktportion befindlichen Klappe mittels Druckluft beschleunigt und dem freien Fall im Füllrohr ausgesetzt.

Die erfindungsgemäße Schlauchbeutelmaschine und das erfindungsgemäße Verfahren haben den Vorteil, daß auch rieselfähige und mehrstückige Produktportionen mit erhöhter Fallbeschleunigung in das Füllrohr und somit in Schlauchbeutel eingefüllt werden können, ohne daß dabei ein luftströmungsbedingtes Auseinanderziehen der Produktportionen vorkommt. Der Raum im Zuführrohr wird bei Anwesenheit einer Produktportion über den Drucklufteinlaß mit Überdruck versehen. Bei Öffnen der Klappe strömt die Luft mitsamt der Produktportion nach unten aus dem Raum heraus und durch das Füllrohr in das verschweißte Ende des Folienschlauches.

Die Druckluft wirkt zunächst im Raum gleichmäßig auf die Produktportion, z.B. Kartoffelchips, und beschleunigt die Produktportion bei Öffnen der unteren Klappe nach unten.

Beim Öffnungsvorgang zuerst die Klappe passierende Produktpartikel werden durch die nacheilenden Partikel, auf welche die sich expandierende Luft des Raumes wirkt, eingeholt und ebenfalls zusätzlich nach unten beschleunigt. Die gesamte Produktportion verbleibt auf ihrem Weg nach unten kompakt. Die Fallgeschwindigkeit der Produktportion ist deutlich erhöht. Infolge der hohen Kompaktierung der Produktportion kann diese sehr zeitgenau und innerhalb einer sehr geringen Zeitspanne in den Schlauchbeutel gefüllt werden. Zudem werden sogenannte Nachzügler, d.h. relativ spät den Schlauchbeutel erreichende Partikel einer Produktportion vermieden. Nachzügelnde Partikel erhöhen die Verpackungsdauer und führen bei ihrer Einschweißung in die Kopfnaht zu einer undichten Kopfnaht.

Die Erfindung ist insbesondere für relativ leichte oder großflächige Partikel, die zu einem Segeln neigen, wie z.B. Kartoffelchips, von Vorteil.

Ein Produkt wird mittels einer gravimetrischen oder einer volumetrischen Methode zunächst portioniert, bevor die derart erhaltene Produktportion in den Raum eingebracht wird.

Weitere vorteilhafte Ausgestaltungen der Erfindung sind in den Ansprüchen 2 bis 5 und 7 bis 10 beschrieben.

Ist analog Anspruch 2 ein zweiter, in das Innere des Zuführrohres mündender, zweiter Drucklufteinlaß unterhalb der unteren Klappe vorgesehen, so kann eine die untere Klappe komplett passiert habende Produktportion durch Betreiben dieses Drucklufteinlasses zusätzlich nach unten beschleunigt werden.

Die durch die beiden Drucklufteinlasse einströmende Luft strömt am unteren Ende des Füllrohres in den Schacht, und anschließend durch den Schacht nach oben bis zu dem oberhalb der Formschulter angeordneten Druckluftauslaß.

Eine dichte innere Wand des Füllrohres, die von dem die Luft ausführenden Schacht umgeben ist (Anspruch 3), dient einer hohen Strömungsdichte der Luft im inneren Bereich des doppelwandigen Füllrohres und damit einer kurzen Verpackungszeit.

Sind die Klappen radial mittels jeweils eines Motors verschiebbar (Anspruch 4), so können sie durch eine schnelle Verschiebung abrupt eine Produktportion freigeben oder das Zuführrohr verschließen.

Ist der Druckluftauslaß oberhalb der Formschulter und unterhalb der unteren Klappe vorgesehen (Anspruch 5), so ist zweierlei erreicht. Zum einen wird der Folienlauf nicht beeinträchtigt, da der Druckluftauslaß oberhalb der Formschulter liegt, und die Folie seitlich in die Formschulter einläuft. Zum anderen ist die Länge des Schachtes minimiert.

Beim erfindungsgemäßen Verfahren werden die erhöhten Produktbeschleunigungen in einfacher Weise analog Anspruch 7 realisiert. Danach wird zunächst die untere Klappe geschlossen, dann die Produktportion von oben in den Raum eingefüllt, dann die obere Klappe geschlossen, anschließend Druckluft in den Raum eingelassen, und schließlich die untere Klappe geöffnet. Eine besonders kurze Druckerzeugungszeit wird erreicht, wenn der Raum weitgehend von der Produktportion ausgefüllt wird. Während des Druckaufbaus kann bereits auf die obere, geschlossene Klappe eine Produktportion gespendet werden (Anspruch 8). Dies hat den Vorteil, daß die Produktportion in einem nächsten Verfahrensschritt lediglich durch Zurückziehen der oberen Klappe, in kompaktester Weise und in kürzester Zeit in den Raum fällt.

Zur weiteren Beschleunigung der Produktportion ist es möglich, die Druckluft auch bei geöffneter unterer Klappe in den Raum strömen zu lassen (Anspruch 9). Dadurch wird der Druckabbau im Raum bei gerade aus dem Raum fallendem Produkt verringert. Dem gleichen Sachverhalt dient auch ein zusätzlicher, unterhalb der unteren Klappe befindlicher Drucklufteinlaß. Wird durch diesen kurz nach dem Öffnen der unteren Klappe Druckluft in das Zuführrohr eingeleitet (Anspruch 10), so wird der Druckabbau im Raum und den angrenzenden Bereichen des Zuführrohres und des Füllrohres verringert und die Fallbeschleunigung erhöht.

Im folgenden wird die Erfindung an Hand eines Ausführungsbeispieles näher beschrieben, Es zeigt:

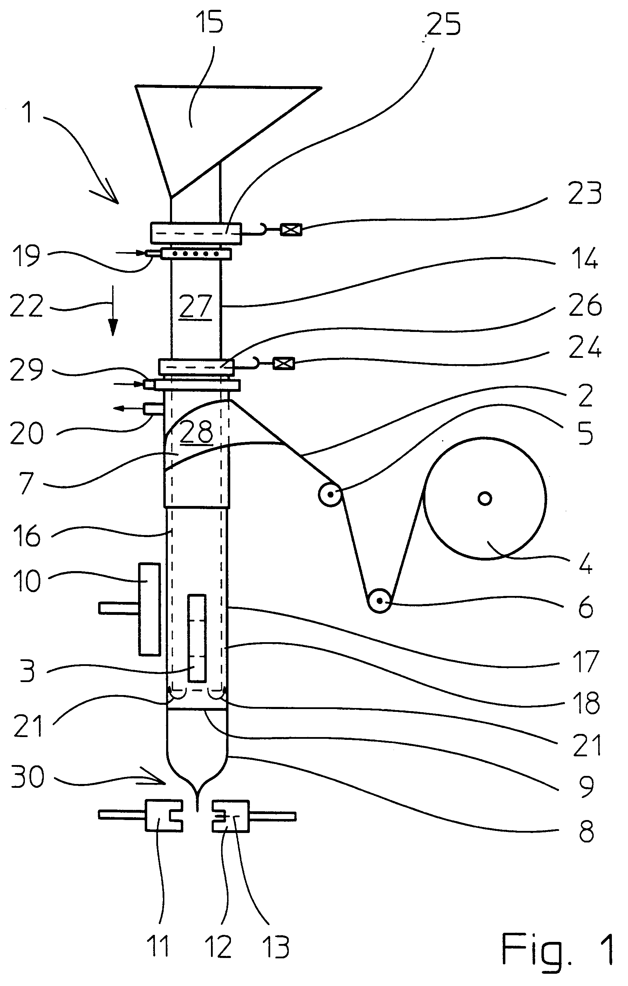

- Figur 1: in einer Seitenansicht in prinzipieller Darstellung eine vertikale Schlauchbeutelmaschine, in deren Zuführrohr zwei in Produktzuführrichtung hintereinander angeordnete, das Zuführrohr jeweils dicht verschließende, mittels Motor rückstellbare Klappen vorgesehen sind, und wobei ein Drucklufteinlaß in einen Raum zwischen den Klappen und ein weiterer unterhalb der unteren Klappe in das Zuführrohr mündet, sowie mit einem Druckluftauslaß.

Bei einer vertikalen Schlauchbeutelmaschine 1 wird eine ebene Folienbahn 2 mittels eines Folienabzugs 3 von einer Vorratsrolle 4 abgezogen, über Umlenkrollen 5, 6 umgelenkt und mittels einer Formschulter 7 zu einem Folienschlauch 8 umgeformt (Figur 1). Der Folienschlauch 8 umgibt ein Füllrohr 9. Der Folienschlauch 8 wird mittels einer Längsschweißeinrichtung 10 längs und mittels gegeneinander beweglicher Quersiegelbacken 11, 12 quer verschweißt. Ein Trennmesser 13 dient der Durchtrennung des Folienschlauches 8. Ein Zuführrohr 14 führt eine abgemessene (zeichnerisch nicht dargestellte) Produktportion aus einem Fülltrichter 15 dem Füllrohr 9 zu.

Das Füllrohr 9 ist mittels zweier konzentrisch zueinander verlaufender Wände 16, 17 doppelwandig ausgebildet. Die Wände 16, 17 begrenzen einen Schacht 18 ringförmigen Querschnitts. Ein Drucklufteinlaß 19 mündet radial in das Zuführrohr 14, ein Druckluftauslaß 20 dient dem Auslaß von Druckluft, die über das Zuführrohr 14 und das Füllrohr 9 an den Stellen 21 in den Schacht 18 gelangte.

Mit der Druckluft wird eine Beschleunigung einer Produktportion über die Erdbeschleunigung hinaus erzielt.

Im Zuführrohr 14 sind zwei in Produktzuführrichtung 22 hintereinander angeordnete, das Zuführrohr 14 jeweils dicht verschließende, mittels jeweils eines Motors 23, 24 verschiebbare Klappen 25, 26 vorgesehen. Der Drucklufteinlaß 19 mündet in den zwischen den Klappen 25, 26 im Zuführraum 14 befindlichen Raum 27.

Unterhalb der unteren Klappen 26 ist ein zweiter, in das Innere 28 des Zuführrohres 14 mündender Drucklufteinlaß 29 vorgesehen, der ebenfalls einer Erhöhung der Fallgeschwindigkeit der in das zugeschweißte Ende 30 des Folienschlauches 8 einzubringenden Produktportion dient.

Die innere, vom Schacht 18 umgebene Wand 16 des Füllrohres 9 ist dicht. Der Druckluftauslaß befindet sich oberhalb der Formschulter 7 und unterhalb der unteren Klappe 26.

Eine Verkürzung der Fallzeit einer Produktportion durch das Füllrohr 9 und den Folienschlauch 8 geschieht derart, daß die Produktportion aus dem mit Druckluft versorgten und daher mit Überdruck versehenen, oben und unten mittels jeweils einer Klappe 25, 26 verschlossenen Raum 27 durch Öffnen der unteren, unter der Produktportion befindlichen Klappe 26 von der Druckluft beschleunigt und dem freien Fall im Füllrohr 9 ausgesetzt wird.

Dazu wird zunächst die untere Klappe 26 geschlossen, dann die Produktportion von oben aus dem Fülltrichter 15 in den Raum 27 eingefüllt, dann die obere Klappe 25 geschlossen, anschließend Druckluft in den Raum 27 eingelassen, und schließlich die untere Klappe 26 geöffnet. Anstatt vom Fülltrichter 15 aus die Produktportion direkt in den Raum 27 zu spenden, kann die Produktportion auch auf die obere, geschlossene Klappe 25 gespendet, und durch Öffnen dieser Klappe 25 in den Raum 27 eingebracht werden.

Die Fallbeschleunigung wird noch dadurch weiter erhöht, daß das Einströmen von Druckluft in den Raum 27 auch bei geöffneter unterer Klappe 26 erfolgt, und daß nach dem Öffnen der unteren Klappe 26 Druckluft durch den Drucklufteinlaß 29 in das Zuführrohr 14 eingeleitet wird.
- 1: Vertikale Schlauchbeutelmaschine
- 2: Folienbahn
- 3: Folienabzug
- 4: Vorratsrolle
- 5, 6: Umlenkrolle
- 7: Formschulter
- 8: Folienschlauch
- 9: Füllrohr
- 10: Längsschweißeinrichtung
- 11, 12: Quersiegelbacke
- 13: Trennmesser
- 14: Zuführrohr
- 15: Fülltrichter
- 16, 17: Wand
- 18: Schacht
- 19: Drucklufteinlaß
- 20: Druckluftauslaß
- 21: Stelle
- 22: Produktzuführrichtung
- 23, 24: Motor
- 25, 26: Klappe
- 27: Raum
- 28: Inneres
- 29: Drucklufteinlaß
- 30: Ende

## Patentansprüche

1. Vertikale Schlauchbeutelmaschine mit einer Formschulter (7) zum Formen eines Folienschlauches (8) aus einer ebenen Folienbahn (2), einem Füllrohr (9) zur äußeren Aufnahme des Folienschlauches, einem Folienabzug (3), einer Längsschweißeinrichtung (10), gegeneinander beweglichen Siegelbacken (11, 12), einem Zuführrohr (14) zum Zuführen einer zu verpackenden Produktportion in das Füllrohr, wobei das Füllrohr unter Bildung eines Schachtes (18) mit ringförmigen Querschnitt doppelwandig (16, 17) ausgebildet ist, sowie mit einem Drucklufteinlaß (19) und einem mit dem Schacht verbundenen Druckluftauslaß (20) zur Beschleunigung einer Produktportion im Innern des Füllrohrs mittels Druckluft, dadurch gekennzeichnet, daß im Zuführrohr (14) zwei in Produktzuführrichtung (22) hintereinander angeordnete, das Zuführrohr (14) jeweils dicht verschließende, rückstellbare Klappen (25, 26) vorgesehen sind, und daß der Drucklufteinlaß (19) in den zwischen den Klappen (25, 26) im Zuführrohr (14) befindlichen Raum (27) mündet.

2. Schlauchbeutelmaschine nach Anspruch 1, dadurch gekennzeichnet, daß ein zweiter, in das Innere des Füllrohres (14) mündender Drucklufteinlaß (29) unterhalb der unteren Klappe (26) vorgesehen ist.

3. Schlauchbeutelmaschine nach Anspruch 1 oder Anspruch 2, dadurch gekennzeichnet, daß die innere, vom Schacht (18) umgebene Wand (16) des Füllrohres (9) dicht ist.

4. Schlauchbeutelmaschine nach Anspruch 1, Anspruch 2 oder Anspruch 3, dadurch gekennzeichnet, daß die Klappen (25, 26) radial mittels eines Motors (23, 24) verschiebbar sind.

5. Schlauchbeutelmaschine nach Anspruch 1, dadurch gekennzeichnet, daß der Druckluftauslaß (20) oberhalb der Formschulter (7) und unterhalb der unteren Klappe (26) vorgesehen ist.

6. Verfahren zur Beschleunigung einer Produktportion in einer vertikalen Schlauchbeutelmaschine gemäß Anspruch 1, dadurch gekennzeichnet, daß die Produktportion aus einem unter Druck befindlichen, oben und unten mittels jeweils einer Klappe (25, 26) verschlossenen Raum (27) durch Öffnen der unteren, unter der Produktportion befindlichen Klappe (26) mittels Druckluft beschleunigt und dem freien Fall im Füllrohr (9) ausgesetzt wird.

7. Verfahren nach Anspruch 6, dadurch gekennzeichnet, daß zunächst die untere Klappe (26) geschlossen wird, dann die Produktportion von oben in den Raum (27) eingefüllt wird, dann die obere Klappe (25) geschlossen wird, anschließend Druckluft in den Raum (27) eingelassen wird, und schließlich die untere Klappe (26) geöffnet wird.

8. Verfahren nach Anspruch 6 oder Anspruch 7, dadurch gekennzeichnet, daß auf die obere, geschlossene Klappe (25) eine Produktportion gespendet wird.

9. Verfahren nach Anspruch 6, Anspruch 7 oder Anspruch 8, dadurch gekennzeichnet, daß das Einströmen von Druckluft in den Raum (27) auch bei geöffneter unterer Klappe (26) erfolgt.

10. Verfahren nach mindestens einem der Ansprüche 6 bis 9, dadurch gekennzeichnet, daß nach dem Öffnen der unteren Klappe (26) Druckluft durch einen zusätzlichen, unterhalb der unteren Klappe (26) vorgesehenen Drucklufteinlaß (29) in das Zuführrohr (14) eingeleitet wird.

## Claims

1. A vertical tubular-bag machine with a shaping shoulder for shaping a film tube from a flat strip of film, a filling tube for receiving the film tube on the outside, a film draw-off means, a longitudinal welding device, sealing jaws movable towards each other, a supply tube for supplying a portion of the products to be packed into the filling tube, wherein the filling tube is constructed with double walls so as to form a cavity of annular cross-section, as well as with a compressed-air inlet and a compressed-air outlet connected to the cavity for accelerating a portion of products in the interior of the filling tube by means of compressed air, **characterized in that** two re-settable valves (25, 26) arranged in succession in the product-supply device (22) and each closing the supply tube (14) tightly are provided in the supply tube (14), and the compressed-air inlet (19) opens into the space (27) present between the valves (25, 26) in the supply tube (14).

2. A tubular-bag machine according to Claim 1, **characterized in that** a second compressed-air inlet (29) opening into the interior of the filling tube (9) is provided below the lower valve (26).

3. A tubular-bag machine according to Claim 1 or Claim 2, **characterized in that** the inner wall (16) of the filling tube (9) surrounded by the cavity (18) is sealed tight.

4. A tubular-bag machine according to Claim 1, Claim 2 or Claim 3, **characterized in that** the valves (25, 26) are displaceable radially by means of a motor (23, 24).

5. A tubular-bag machine according to Claim 1, **characterized in that** the compressed-air outlet (20) is provided above the shaping shoulder (7) and below the lower valve (26).

6. A method of accelerating a portion of products in a vertical tubular-bag machine according to Claim 1, **characterized in that** the portion of products is accelerated by means of compressed air out of a space (27) - under pressure and closed at the top and bottom by means of a valve (25, 26) in each case - by opening the lower valve (26) situated below the portion of products and is subjected to the free fall in the filling tube (9).

7. A method according to Claim 6, **characterized in that** first the lower valve (26) is closed, then the portion of products is poured into the space (27) from above, then the upper valve (25) is closed, after that compressed air is released into the space (27), and finally the lower valve (26) is opened.

8. A method according to Claim 6 or Claim 7, **characterized in that** a portion of products is dispensed onto the upper closed valve (25).

9. A method according to Claim 6, Claim 7 or Claim 8, **characterized in that** compressed air flows into the space (27) even when the lower valve (26) is opened.

10. A method according to at least one of Claims 6 to 9, **characterized in that** after the lower valve (26) has been opened compressed air is introduced into the supply tube (14) through an additional compressed-air inlet (29) provided below the lower valve (26).

## Revendications

1. Tubeuse verticale comportant un épaulement de formage (7) pour le formage d'un tube en feuille (8) à partir d'une feuille continue (2) plane, un tube de remplissage (9) pour le logement extérieur du tube en feuille, un dispositif de tirage de feuille (3), un dispositif de soudage longitudinal (10), des mâchoires de scellement (11, 12) mobiles l'une par rapport à l'autre, un tube d'alimentation (14) pour amener une portion de produit à emballer dans le tube de remplissage, le tube de remplissage étant réalisé à double paroi (16, 17) par formation d'un puits (18) de section annulaire et comportant une entrée d'air comprimé (19) ainsi qu'une sortie d'air comprimé (20), reliée au puits, pour accélérer une portion de produit à l'intérieur du tube de remplissage au moyen d'air comprimé, caractérisée en ce que dans le tube d'alimentation (14) sont prévus deux clapets (25, 26) à rappel, disposés l'un derrière l'autre dans le sens d'amenée du produit (22) et qui ferment chacun de manière étanche le tube d'alimentation (14), et en ce que l'entrée d'air comprimé (19) débouche dans le volume (27) qui se trouve entre les clapets (25, 26) dans le tube d'alimentation (14).

2. Tubeuse selon la revendication 1, caractérisée en ce qu'une deuxième entrée d'air comprimé (29), qui débouche à l'intérieur du tube de remplissage (14), est prévue au-dessous du clapet inférieur (26).

3. Tubeuse selon la revendication 1 ou la revendication 2, caractérisée en ce que la paroi (16) intérieure du tube de remplissage (9), entourée par le puits (18), est étanche.

4. Tubeuse selon la revendication 1, la revendication 2 ou la revendication 3, caractérisée en ce que les clapets (25, 26) sont déplaçables radialement au moyen d'un moteur (23, 24).

5. Tubeuse selon la revendication 1, caractérisée en ce que la sortie d'air comprimé (20) est prévue au-dessus de l'épaulement de formage (7) et au-dessous du clapet inférieur (26).

6. Procédé d'accélération d'une portion de produit dans une tubeuse verticale selon la revendication 1, caractérisé en ce que la portion de produit est accélérée, à partir d'un volume (27) fermé à sa partie supérieure et à sa partie inférieure au moyen d'un clapet (25, 26) respectif et qui se trouve sous pression, par ouverture du clapet (26) inférieur se trouvant au-dessous de la portion de produit, au moyen d'air comprimé, et en ce que la portion de produit est soumise à une chute libre dans le tube de remplissage (9).

7. Procédé selon la revendication 6, caractérisé en ce que le clapet inférieur (26) est d'abord fermé, puis la portion de produit est introduite à partir du haut dans le volume (27), puis le clapet supérieur (25) est fermé, ensuite de l'air comprimé est introduit dans le volume (27), et enfin le clapet inférieur (26) est ouvert.

8. Procédé selon la revendication 6 ou la revendication 7, caractérisé en ce qu'une portion de produit est distribuée sur le clapet supérieur (25) fermé.

9. Procédé selon la revendication 6, la revendication 7 ou la revendication 8, caractérisé en ce que l'arrivée d'air comprimé dans le volume (27) s'effectue aussi lorsque le clapet inférieur (26) est ouvert.

10. Procédé selon l'une au moins des revendications 6 à 9, caractérisé en ce qu'après ouverture du clapet inférieur (26), de l'air comprimé est introduit dans le tube d'alimentation (14), par une entrée d'air comprimé (29) supplémentaire, prévue au-dessous du clapet inférieur (26).
